(19) Europäisches Patentamt
European Patent Office
Office européen des brevets

(11) EP 2 527 378 B1

(12) **EUROPEAN PATENT SPECIFICATION**

(45) Date of publication and mention of the grant of the patent:
**11.03.2015 Bulletin 2015/11**

(21) Application number: **11734895.3**

(22) Date of filing: **21.01.2011**

(51) Int Cl.:
***C08F 210/16*** *(2006.01)* ***C08J 5/18*** *(2006.01)*
***C08L 23/08*** *(2006.01)* ***C08F 4/64*** *(2006.01)*

(86) International application number:
**PCT/KR2011/000445**

(87) International publication number:
**WO 2011/090346 (28.07.2011 Gazette 2011/30)**

(54) **USE OF AN ETHYLENE-OCTENE COPOLYMER HAVING A UNIFORM COMONOMER DISTRIBUTION IN THE FABRICATION OF FILMS**

VERWENDUNG EINES ETHYLEN-OCTEN-COPOLYMERS MIT EINER GLEICHFÖRMIGEN COMONOMERVERTEILUNG IN DER HERSTELLUNG VON FILMEN

UTILISATION D'UN COPOLYMÈRE D'ÉTHYLÈNE-OCTÈNE PRÉSENTANT UNE DISTRIBUTION UNIFORME DES COMONOMÈRES DANS LA FABRICATION DE FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2010 KR 20100005488**

(43) Date of publication of application:
**28.11.2012 Bulletin 2012/48**

(73) Proprietor: **LG Chem, Ltd.**
**Youngdungpo-gu**
**Seoul 150-721 (KR)**

(72) Inventors:
- **LEE, Eun-Jung**
  **Daejeon 305-768 (KR)**
- **LEE, Choong-Hoon**
  **Daejeon 302-737 (KR)**
- **SEO, Beom-Doo**
  **Daejeon 305-340 (KR)**
- **JEONG, Jeong-Yon**
  **Daejeon 305-769 (KR)**
- **PARK, Sun-Young**
  **Daejeon 302-120 (KR)**
- **KUM, Don-Ho**
  **Daejeon 305-810 (KR)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**WO-A1-2008/140205**
**KR-A- 20080 076 187**
**KR-A- 20080 097 827**
**KR-A- 20080 101 791**
**KR-B1- 100 271 835**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 527 378 B1

## Description

### TECHNICAL FIELD

The present invention relates to the use of an ethylene-octene copolymer having uniform comonomer distribution in the fabriction of films, and more particularly, to an ethylene-octene copolymer that has a narrow molecular weight distribution, a uniform distribution of a comonomer to be copolymerized with ethylene, and a lower density under the same conditions in a comonomer content.

### BACKGROUND OF ART

The metallocene catalysts have enabled preparations of a wide variety of polyolefin products with a density ranging from 0.860 to 0.950 g/cm$^3$. Polyethylene synthesized in the presence of a metallocene catalyst is characterized by the fact that the main chain of the polymer has relatively uniform size and structure. The physiochemical characteristics of the polyethylene is dependent upon the type, content, molecular weight and molecular weight distribution of the comonomer, and the distribution of the comonomer in the main chain, crystalline structure, and so on. In other words, the physiochemical characteristics are the results of all the factors determining the complicated structure of the polymer compound.

The degree of crystallinity and the density of polyolefin can be controlled by forming branched chains in the main chain of a copolymer of ethylene and $\alpha$-olefin. The structure nearly without branched chains is ready to form a crystalline structure and is dense, while the structure with many branched chains is hard to form a crystalline structure and thus exhibits a relatively low density. The copolymer with the lower density has the lower melting point.

The most significant factors that determine the melting point of the polyolefin copolymer are the content of the comonomer ($\alpha$-olefin) and the distribution of the comonomer in the main chain. The comonomer distribution in the main chain affects the melting point, the degree of crystallinity, and the physical properties (e.g., modulus of elasticity, tensile strength, optical transmittance, etc.) of the polymer.

How the comonomer of a random copolymer affects the decrease in the melting point is specified as follows [Flory, Trans Faraday Soc. 1955, 51, 848]:

$$\frac{1}{Tm^{C}} = \frac{1}{Tm^{H}} - \frac{R}{\Delta Hu} \ln p$$

In the above equation, $Tm^C$ is the melting point of the copolymer; $Tm^H$ is the melting point of the ethylene homopolymer; R is the gas constant; $\Delta Hu$ is the enthalpy per mole of 100% PE; and $p$ is the possibility that ethylene comes next to the ethylene monomer in the distribution of the copolymer.

According to Allegra [J Polym Sci Part B: Polym Phys. 1992, 30, 809], $p$ is dependent upon the comonomer distribution as follows:

$$p = 1 - \frac{1 - [1-4(1-r_e r_c)X_E(1-X_E)]^{1/2}}{2(1-r_e r_c)X_E}$$

In the equation, $X_E$ is the molar fraction of ethylene in the polymer; and $r_e$ and $r_c$ represent the reactivity of ethylene and comonomer in the copolymer, respectively, which are used to describe the characteristic of the catalyst system. $r_e r_c$, the product of $r_e$ and $r_c$, represents the distribution of monomers in the main chain of the copolymer. The monomer reactivity ratios, $r_e$ and $r_c$, can be understood from $^{13}C$ NMR spectra according to the Randall method and calculated as follows using the Kakugo method [Macromolecules, 1982, 15, 1150].

$$r_e = \frac{2EEE+EEC}{(2ECE+CCE)X} \quad , \quad r_c = \frac{(2CCC+CCE)X}{2ECE+CCE}$$

In the equations, E is ethylene; C is the comonomer; and X is the molar fraction of ethylene as the monomer and the comonomer added to the reactor. These values are means for imaginarily understanding the fine structure of the copolymer from the added amount of the monomers to the reactor and the $^{13}C$ NMR interpretation.

A blocky comonomer distribution ($r_e * r_c > 1$) is accompanied by a high melting point; an alternative comonomer distribution ($r_e * r_c < 1$) a low melting point; and a random comonomer distribution ($r_e * r_c = 1$) a medium melting point. The detailed description about this characteristic is specified in the paper [J Polym Sci Part B: Polym Phys 2004, 42, 3416 3427] written by Mirabella.

Accordingly, there is a need for studies on the ethylene-octene copolymer that has a narrow molecular weight distribution, a uniform distribution of a comonomer copolymerized with ethylene, and a lower density under the same conditions in a comonomer content, in order to realize a sufficient sealing effect even at a low temperature with a good sealing strength secured in the fabrication of films.

## DISCLOSURE OF INVENTION

## TECHNICAL PROBLEM

It is an object of the present invention to provide a novel ethylene-octene copolymer having a uniform octene distribution to realize a lower density and a lower melting point under the same conditions in a comonomer content, for the preparation of a ultralow-density ethylene-octene copolymer using a metallocene catalyst.

## TECHNICAL SOLUTION

To achieve the object, the present invention is to provide an ethylene-octene copolymer being prepared in the presence of a catalyst composition and having a density of 0.857 to 0.91 g/cm$^3$, the ethylene-octene copolymer having:

1) a molecular weight distribution Mw/Mn of at most 3.5;
2) a reactivity ratio $r_e$ of ethylene to catalyst multiplied by a reactivity ratio $r_o$ of octene to catalyst being in the range of 0.5 to 0.8; and
3) the density of the ethylene-octene copolymer and an octene content $\alpha$ (alpha, mol%) in the ethylene-octene copolymer being in the range of the following Inequation 1:

[Inequation 1]

$$0.9190 - 0.0043\alpha < \text{density} < 0.9205 - 0.0040\alpha$$

Hereinafter, the present invention will be described in detail.

In accordance with the present invention, the ethylene-octene copolymer is prepared in the presence of a catalyst composition and has a density of 0.857 to 0.91 g/cm$^3$, the ethylene-octene copolymer having: 1) a molecular weight distribution Mw/Mn of at most 3.5; 2) a reactivity ratio $r_e$ of ethylene to catalyst multiplied by a reactivity ratio $r_o$ of octene to catalyst being in the range of 0.5 to 0.8; and 3) the density and the octene content (a, mol%) satisfying the above Inequation 1.

As for the ethylene-octene copolymer of the present invention, a reactivity ratio $r_e$ of ethylene to catalyst multiplied by a reactivity ratio $r_o$ of octene to catalyst, that is, $r_e$ multiplied by $r_o$, ranges from 0.5 to 0.8.

The result of a reactivity ratio $r_e$ of ethylene to catalyst multiplied by a reactivity ratio $r_o$ of octene to catalyst, that is, $r_e * r_o$ represents the distribution of monomers in the main chain of the ethylene-octene copolymer. The monomer reactivity ratios to catalyst, $r_e$ and $r_o$, can be understood from $^{13}C$ NMR spectra according to the Randall method and calculated as follows using the Kakugo method [Macromolecules, 1982, 15, 1150].

$$r_e = \frac{2EEE+EEC}{(2ECE+CCE)X} \qquad r_o = \frac{(2CCC+CCE)X}{2ECE+CCE}$$

In the equations, E is ethylene; C is the comonomer, octene; and X is the molar fraction of monomers, that is, ethylene and octene added to the reactor. EEE is the mole percent (mol%) of ethylene-ethylene-ethylene block in the

ethylene-octene copolymer; EEC the mole percent (mol.%) of ethylene-ethylene-octene block in the ethylene-octene copolymer; ECE the mole percent (mol.%) of ethylene-octene-ethylene block in the ethylene-octene copolymer; CCE the mole percent (mol.%) of octene-octene-ethylene block in the ethylene-octene copolymer; and CCC the mole percent (mol.%) of octene-octene-octene block in the ethylene-octene copolymer.

The values of $r_e$ and $r_o$ that are the reactivity ratios of monomers to catalyst are means for estimating the fine structure of the copolymer through monomer contents and $^{13}C$ NMR interpretation.

A blocky comonomer distribution ($r_e$ * $r_c$ > 1) is accompanied by a high melting point; an alternative comonomer distribution ($r_e$ * $r_c$ < 1) a low melting point; and a random comonomer distribution ($r_e$ * $r_c$ = 1) a medium melting point.

In the ethylene-octene copolymer of the present invention, the product of a reactivity ratio $r_e$ of ethylene to catalyst and a reactivity ratio $r_o$ of octene to catalyst is in the range of 0.5 to 0.8. This implies that the comonomer, octane, has a uniform distribution in the copolymer.

In the ethylene-octene copolymer of the present invention, the density of the ethylene-octene copolymer and the octene content $\alpha$ (alpha, mol%) in the ethylene-octene copolymer satisfy the Inequation 1. The ethylene-octene copolymer of the present invention exhibits a far lower density than the existing ethylene-octene copolymers under the same conditions in a comonomer content. Also, the ethylene-octene copolymer of the present invention may minimize the content of the comonomer used in the preparation process and reduce the production cost. For example, the density of the ethylene-octene copolymer is 0.857 to 0.91 g/cm$^3$, preferably 0.859 to 0.91 g/cm$^3$, more preferably 0.861 to 0.91 g/cm$^3$.

In the ethylene-octene copolymer of the present invention, the molecular weight distribution Mw/Mn that is the ratio of the weight average molecular weight Mw to the number average molecular weight Mn is 3.5 or less, or 2.0 to 3.5, preferably 3.4 or less, or 2.0 to 3.4, more preferably 3.3 or less, or 2.0 to 3.3. Here, the weight average molecular weight Mw of the ethylene-octene copolymer is preferably 30,000 to 300,000, more preferably 30,000 to 250,000, most preferably 30,000 to 200,000. The ethylene-octene copolymer may have the weight average molecular weight Mw controlled in different ranges depending on the usage of films.

In the ethylene-octene copolymer of the present invention, the melting point Tm (degrees Celsius, °C) and the octene content $\alpha$ (alpha, mol%) preferably meet the following Inequation:

[Inequation 2]

$$120 - 6.2\alpha < Tm < 129 - 5.7\alpha$$

For example, the ethylene-octene copolymer has a melting point Tm in the range of 30 to 120 °C, preferably 40 to 115 °C, more preferably 40 to 110 °C. The ethylene-octene copolymer of the present invention is particularly characterized by a considerably lower melting point Tm under the same conditions in a comonomer content.

In the ethylene-octene copolymer of the present invention, the catalyst composition may include a metallocene catalyst. The catalyst composition may also include a transition metal compound represented by the following Formula 1:

[Formula 1]

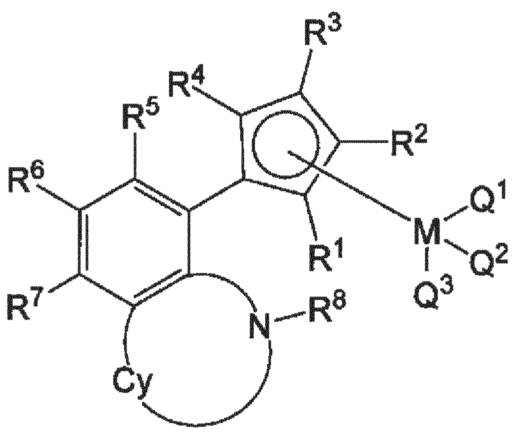

In the Formula 1, $R^1$, $R^2$, $R^3$, and $R^4$ are the same as or different from one another and are independently hydrogen; an alkyl, aryl or silyl radical, which are comprised of I to 20 carbon atoms; an alkenyl, alkylaryl or arylalkyl radical, which are comprised of 1 to 20 carbon atoms; or a hydrocarbyl-substituted Group 14 metalloid radical. Here,

$R^1$, $R^2$, $R^3$, and $R^4$ may be linked to one another to form a ring by an alkylidine radical including an alkyl or aryl radical having 1 to 20 carbon atoms.

$R^5$, $R^6$, and $R^7$ are the same as or different from one another and are independently hydrogen; halogen radical; or alkyl, aryl, alkoxy, aryloxy or amido radical having 1 to 20 carbon atoms. Here, at least two of $R^5$, $R^6$, and $R^7$ may be linked to each other to form an aliphatic or aromatic ring.

$R^8$ is hydrogen; or alkyl, aryl, alkylaryl or arylalkyl radical, which are comprised of I to 20 carbon atoms.

Cy is a substituted or unsubstituted aliphatic or aromatic ring.

M is a Group-4 transition metal.

$Q^1$, $Q^2$ and $Q^3$ are independently halogen radical; alkyl or aryl amido radical having I to 20 carbon atoms; alkyl, alkenyl, aryl, alkylaryl or arylalkyl radical, which are comprised of 1 to 20 carbon atoms; or alkylidene radical, which are comprised of I to 20 carbon atoms.

To prepare the compound of the formula 1, one equivalent weight of n-BuLi and an excess of $CO_2$ gas are added to 1,2,3,4-tetrahydroquinoline 1 to prepare a lithium carbamate compound 2 in the following reaction scheme 1 (in step 1). To the compound 2 are added t-BuLi and a substituted cyclopentenone compound to prepare a cyclopentadienyl-based compound 3 (in step 2). The nitrogen atoms of the compound 3 are substituted with alkyl groups such as methyl through N-alkylation to obtain a ligand having an amine functional group in the form of a ring linked to a phenylene group (in step 3). One equivalent weight of n-BuLi is continuously added to the ligand to obtain a lithium compound 4, which is reacted with a $MCl_4$ (M = Ti, Zr, or Hf) compound to prepare a metal compound 5 (in step 4).

The preparation method may be represented by the following Reaction Scheme 1:

[Reaction Scheme 1]

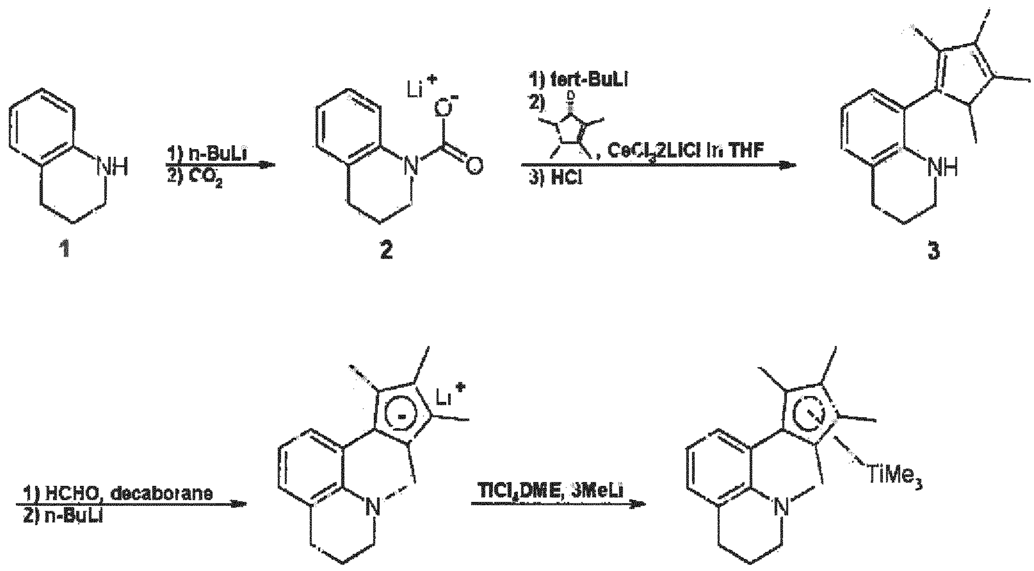


1 2 3

4 5

In the ethylene-octene copolymer of the present invention, the catalyst composition may further include at least one co-catalyst selected from the compounds represented by the following Formula 2, 3 or 4:

[Formula 2] $-[Al(R^9)-O]_a-$

where $R^9$ is a halogen radical, a hydrocarbyl radical having 1 to 20 carbon atoms, or a halogen-substituted hydrocarbyl radical having 1 to 20 carbon atoms; and a is an integer of at least 2,

[Formula 3] $Al(R^{10})_3$

where $R^{10}$ is a halogen radical, a hydrocarbyl radical having 1 to 20 carbon atoms, or a halogen-substituted hydrocarbyl radical having 1 to 20 carbon atoms; and a is an integer of at least 2,

[Formula 4] $[L-H]^+[ZA_4]^-$ or $[L]^+[ZA_4]^-$

where L is a neutral or cationic Lewis acid; H is hydrogen; Z is a Group 13 element; and A is an aryl or alkyl radical, which are comprised of 1 to 20 carbon atoms with at least one hydrogen atom thereof being substituted with a hydrocarbyl, alkoxy or phenoxy radical, which are comprised of 6 to 20 carbon atoms.

The preparation method for the ethylene-octene copolymer according to the present invention may use the general method known in the related art excepting that a Group 4 transition metal compound represented by the Formula 1 is used.

Preferably, the reactor used in the polymerization process for the ethylene-octene copolymer is a continuous stirred tank reactor (CSTR) or a plug flow reactor (PFR).

The ethylene-octene copolymer of the present invention may have an octene content of 2 to 20 mol%, preferably 3 to 20 mol%, more preferably 3 to 17 mol%.

The ethylene-octene copolymer of the present invention is used for fabrication of films.

Using an ethylene-octene copolymer that realizes a lower density and a lower melting point than the conventional ethylene-octene copolymers under the same conditions in a comonomer content, the films can exhibit a low-temperature seating performance and a good sealing strength.

The matters of the present invention other than those specified above may be further included or omitted under necessity and not specifically restrict the present invention.

## ADVANTAGEOUS EFFECTS

The present invention relates to an ethylene-octene copolymer having a narrow molecular weight distribution and a uniform comonomer distribution. The ethylene-octene copolymer of the present invention may exhibit a lower density and a lower melting point than the conventional ethylene-octene copolymers under the same conditions in a comonomer content. Accordingly, the use of the ethylene-octene copolymer of the present invention in the fabrication of films may provide films that have a low-temperature sealing performance and a good sealing strength.

## BRIEF DESCRIPTION OF THE DRAWINGS

FIG. 1 shows a specified example of a polymerization process for the ethylene-octene copolymer of the present invention.

FIG. 2 is a graph showing the octene content and the density of the ethylene-octene copolymers according to Example 1 and Comparative Example 3.

FIG. 3 is a graph showing the octene content and the melting point of the ethylene-octene copolymers according to Example 1 and Comparative Example 3.

FIG. 4 is a graph showing the peel strength depending on the heat sealing temperature of films fabricated using the ethylene-octene copolymers of Example 9 and Comparative Example 7.

## BEST MODE FOR CARRYING OUT THE INVENTION

Hereinafter, the present invention will be described in further detail with reference to the following examples, which are presented as exemplary only and not intended to limit the scope of the present invention.

<u>Preparation Example 1:</u> Preparation of Catalyst Composition

Organic reagents and solvents were purchased from Aldrich and Merk chemical companies and purified before use according to the standardized method. In all the synthesis steps, intrusion of air and moisture was protected to enhance the reproducibility of the experiments. To identify the structure of the compounds, a 400MHz nuclear magnetic resonance (NMR) spectrometer and an X-ray spectrometer were used to acquire the respective spectra and spectrographs.

1) Preparation of Lithium Carbamate Compound

1,2,3,4-tetrahydroquinoline (13.08 g, 98.24 mmol) and diethyl ether (150 mL) were added into a Schlenk flask. The flask was put in a cold bath at -78 °C filled with dry ice and acetone and stirred for 30 minutes. Then, n-BuLi (39.3 mL, 2.5M hexane solution, 98.24 mmol) was syringed into the flask in the nitrogen atmosphere to form light yellowish

slurry. After 2-hour agitation, the flask was removed of butane gas while warmed to the room temperature. The flask was cooled down in a cold bath at -78 C and supplied with $CO_2$ gas. With $CO_2$ gas added, the slurry disappeared to leave a clear solution. The flask was connected to a bubbler to eliminate the $CO_2$ gas, warmed to the room temperature and then vacuumed to remove the remaining $CO_2$ gas and the solvent. The flask was transferred into a dry box, supplied with pentane, and subjected to agitation and filtration to yield a white solid compound, which formed a coordinate covalent bond with diethyl ether. The yield of the product was 100 %.

$^1$H NMR($C_6D_6$, $C_5D_5N$): δ 8.35(d, J=8.4Hz, 1H, CH), δ 6.93-6.81(m, 2H, CH), δ 6.64(t, J=7.4Hz, 1H, CH), δ 3.87 (br, s, 2H, quin-$CH_2$), δ 3.25 (q, J = 7.2 Hz, 4H, ether), δ 2.34 (br s, 2H, quin-$CH_2$), δ 1.50 (br s, 2H, quin-$CH_2$), δ 1.90 (t, J = 7.2 Hz, 6H, ether) ppm.

2) Preparation of 8-(2,3,4,5-tetramethyl-1,3-cyclopentadiethyl)-1,2,3,4-tetrahydroquinoline

The lithium carbamate compound (8.47 g, 42.60 mmol) was put into a Schlenk flask. To the flask were added tetrahydrofurane (4.6 g, 63.9 mmol) and diethyl ether (45 mL) in sequence. The flask was put in a cold bath at -20 °C with acetone and a small amount of dry ice and stirred for 30 minutes. Then, tert-BuLi (25.1 mL, 1.7 M, 42.60 mmol) was added to turn the solution red. Maintained at -20 °C, the flask was stirred for 6 hours. In a syringe, a $CeCl_3 \cdot 2LiCl$ solution (129 mL, 0.33 M, 42.60 mmol in tetrahydrofurane) was mixed with tetramethylcyclopentenone (5.89 g, 42.60 mmol). The mixture was then syringed into the flask in the nitrogen atmosphere. The flask was gradually warmed to the room temperature and, after one hour, the chiller was taken away to raise the temperature of the flask to the room temperature. After addition of water (15 mL) and ethylacetate, the solution was filtered to obtain a filtrate. The filtrate was transferred to a separatory funnel, mixed with HCl (2N, 80 mL) and stirred for 12 minutes. The solution was neutralized with a saturated aqueous solution of sodium hydrogen carbonate (160 mL) to extract the organic phase. Anhydrous magnesium sulfate was added to the organic phase to eliminate water, and after a filtration, the filtrate was taken and then removed of the solvent. The column chromatography was used to obtain yellowish oil (hexane : toluene = 10 : 1 (v/v); hexane : ethylacetate = 10 : 1 (v/v); and product yield = 40 %).

$^1$H NMR($C_6D_6$): δ 1.00 (br d, 3H, Cp-$CH_3$), 1.63 - 1.73 (m, 2H, quin-$CH_2$), 1.80 (s, 3H, Cp-$CH_3$), 1.81 (s, 3H, Cp-$CH_3$), 1.85 (s, 3H, Cp-$CH_3$), 2.64 (t, J = 6.0 Hz, 2H, quin-$CH_2$), 2.84 - 2.90 (br, 2H, quin-$CH_2$), 3.06 (br s, 1H, Cp-H), 3.76 (br s, 1H, N-H), 6.77 (t, J = 7.2 Hz, 1H, quin-CH), 6.92 (d, J = 2.4 Hz, 1H, quin-CH), 6.94 (d, J = 2.4 Hz, 1H, quin-CH) ppm.

3) Preparation of Lithium 1-(N-methyl-1,2,3,4-tetrahydroquinoline-8-yl)-2,3,4,5-tetramethylcyclopentadienyl

An aqueous solution of 37% formaldehyde (0.88 mL, 11.8 mmol) was added to a solution of 8-(2,3,4,5-tetramethyl-l,3-cyclopentadienyl)-1,2,3,4-tetra-hydroquinoline (2 g, 7.89 mmol) in methanol (42 mL). After 30-minute agitation at the room temperature, the mixture was mixed with dicarborane (0.29 g, 2.37 mmol) and further stirred for one hour. The product compound was filtered through a silica pad using a mixed solvent of hexane and ethyl acetate (10:1 (v/v)). The filtrate was removed of the solvent, and the compound thus obtained was transferred to a flask. After addition of pentane (50 mL), the flask was cooled down to -78 °C. At -78 °C, n-BuLi (3.2 mL, 2.5M hexane solution, 7.89 mmol) was syringed into the flask in the nitrogen atmosphere. Gradually warmed up to the room temperature, the flask was stirred for 3 hours at the room temperature. The reaction solution was filtered in the nitrogen atmosphere, washed with pentane (10 mL) twice and then dried under vacuum to obtain a yellowish lithium salt in the sold state (0.837 g, yield 39 %).

$^1$H NMR (pyr-d5): δ 7.31 (br s, 1H, CH), δ 7.10-6.90(m, 1H, CH), δ 6.96(s, 1H, CH), δ 3.09(m, 2H, quinoline-$CH_2$), δ 2.77 (t, J=6Hz, 2H, quinoline-$CH_2$), δ 2.51-2.11(m, 15H, Cp-$CH_3$, N-$CH_3$), δ 1.76 (m, 2H, quinoline-$CH_2$) ppm.

4) Preparation of 1-(N-methyl-1,2,3,4-tetrahydroquinoline-8-yl)-2,3,4,5-tetra-methylcyclopentadienyl titanium (IV) trichloride

In a dry box, $TiCl_4 \cdot DME$ (429 mg, 1.53 mmol) and diethyl ether (25 mL) were put into a flask and then mixed with MeLi (2.9 mL, 1.6M diethyl ether solution, 4.60 mmol) gradually added while stirred at -30 °C. After a 15-minute agitation, the lithium salt compound (419 mg, 1.53 mmol) thus obtained was added to the flask, which was then warmed to the room temperature and stirred for 3 more hours. After completion of the reaction, the solution was removed of the solvent under vacuum, dissolved in pentane and filtered. The filtrate thus extracted was removed of pentane under vacuum to obtain a titanium complex (431 mg, yield 75%).

$^1$H NMR($C_6D_6$): δ 6.83(d, J=7.2Hz, 1H, CH), δ 6.78(d, J=7.6Hz, 1H, CH), δ 6.73(t, J=7.4Hz, 1H, CH), δ 2.80(m, 2H, quin-$CH_2$), δ 2.52(t, J=6.4Hz, 2H, quin-$CH_2$), δ 2.26(s, 3H, N-$CH_3$), δ 1.96(s, 6H, Cp-$CH_3$), δ 1.85(s, 6H, Cp-$CH_3$), δ 1.50(m, 2H, quin-$CH_2$), δ 1.26(s, 9H, Ti-$CH_3$) ppm.

Examples 1 to 9: Preparation of Ethylene-Octene Copolymer.

In the presence of a catalyst composition including 1-(N-methyl-1,2,3,4-tetrahydroquinoline-8-yl)-2,3,4,5-tetramethyl-cyclopentadienyl titanium (IV) trichloride obtained in the Preparation Example 1, a polymerization reaction using ethylene and 1-octene as monomers was carried out in the manner of a continuous solution process as follows.

The 1-(N-methyl-1,2,3,4-tetrahydroquinoline-8-yl)-2,3,4,5-tetramethyl-cyclopentadienyl titanium (IV) trichloride compound treated with triisobutyl aluminum was prepared as a 1.0 X $10^{-4}$ M solution in hexane in a catalyst storage tank. The co-catalyst was kept as slurry (2.4 X $10^{-4}$ M) in a toluene or hydrocarbon solvent in a co-catalyst storage tank. These two components were individually pumped in/out, and the temperature of the reactor was controlled by adjusting the temperature of oil passing through the jacket of the reactor wall. The density of the polymer was controlled by adjusting the ethylene/comonomer weight ratio in the supplied materials.

The experiment used 1-(N-methyl-1,2,3,4-tetrahydroquinoline-8-yl)-2,3,4,5-tetramethyl-cyclopentadienyl titanium (IV) trichloride as a catalyst composition, dimethylanilinium tetrakis-(pentafluorophenyl) borate as an activator, and triisobutyl aluminum as a scavenger.

<Continuous High-Temperature Solution Process>

A 1.5L continuous stirred tank reactor preheated at 120 °C was supplied with hexane as a solvent and 1-octene and ethylene as monomers under high pressure of 90 to 100 bar. The solution polymerization was carried out under the reactor pressure of 89 bar. The representative reaction scheme of the polymerization process is given in FIG. 1.

Ethylene 5 mixed with hydrogen 6 was added to a hexane solvent 3 mixed with 1-octene 4. The monomers were continuously fed into a reactor 8 as a stream. TIBAL 7 used as a scavenger was supplied to the single stream at the front end of the reactor. Catalyst 1 and co-catalyst 2 were directly added into the reactor 8 in a continuous manner.

After completion of the polymerization reaction, the melted polymer was transferred to a separator 10 through a discharge stream 9 from the reactor 8 and then separated into unreacted 1-octene, unreacted ethylene, unreacted hydrogen, and diluted mixture stream 11. The melted polymer was continuously pelletized 12, and solid pellets 13 were collected.

The polymerization conditions for the copolymers of ethylene and 1-octene according to the Examples 1 to 9 are represented in Table 1.

[Table 1]

| | Catalyst (μmol/min) | Co-catalyst (μmol/min) | AIR3 (μmol/min) | Temperature (°C) | Pressure (bar) | Hexane (kg/hr) | Ethylene (kg/hr) | Octene (kg/hr) |
|---|---|---|---|---|---|---|---|---|
| Example 1 | 0.4 | 1.2 | 0.05 | 149 | 89 | 3.32 | 0.63 | 0.54 |
| Example 2 | 0.4 | 1.2 | 0.05 | 155 | 89 | 3.32 | 0.63 | 0.48 |
| Example 3 | 0.4 | 1.2 | 0.05 | 157 | 89 | 3.32 | 0.63 | 0.43 |
| Example 4 | 0.4 | 1.2 | 0.05 | 161 | 89 | 3.32 | 0.63 | 0.38 |
| Example 5 | 0.4 | 1.2 | 0.05 | 160 | 89 | 3.32 | 0.66 | 0.38 |
| Example 6 | 0.4 | 1.2 | 0.05 | 165 | 89 | 3.32 | 0.70 | 0.34 |
| Example 7 | 0.4 | 0.8 | 0.05 | 165 | 89 | 3.32 | 0.70 | 0.32 |
| Example 8 | 0.4 | 0.8 | 0.05 | 170 | 89 | 3.32 | 0.73 | 0.30 |
| Example 9 | 0.4 | 0.8 | 0.05 | 169 | 89 | 3.32 | 0.74 | 0.30 |

The properties of the copolymers of ethylene and 1-octene according to the Examples 1 to 9 are represented in Table 2.

[Table 2]

| | Octene/ Ethylene (molar ratio) | Hydrogen (L/hr) | Retention Time (min) | Yield (g/hr) | Activity (kg PE/g Ti) | MI2 (g/10min) | Density ($g/cm^3$) |
|---|---|---|---|---|---|---|---|
| Example 1 | 0.21 | 0.9 | 7 | 754.8 | 1313.4 | 5.76 | 0.868 |
| Example 2 | 0.19 | 0.9 | 7 | 740.1 | 1287.8 | 4.8 | 0.87 |
| Example 3 | 0.17 | 0 | 7 | 660.6 | 1149.4 | 0.95 | 0.874 |
| Example 4 | 0.15 | 0 | 7 | 682.1 | 1186.9 | 0.95 | 0.88 |
| Example 5 | 0.14 | 0 | 7 | 691.0 | 1202.3 | 1.04 | 0.885 |
| Example 6 | 0.12 | 0 | 7 | 701.0 | 1219.7 | 0.79 | 0.891 |
| Example 7 | 0.11 | 0.1 | 7 | 626.1 | 1089.4 | 1.06 | 0.893 |
| Example 8 | 0.10 | 0.2 | 7 | 599.3 | 1042.8 | 0.89 | 0.896 |
| Example 9 | 0.10 | 0.2 | 7 | 610.0 | 1061.4 | 0.85 | 0.899 |

As shown in Table 1, as for Example 2, ethylene and 1-octene were continuously fed into the reactor at 0.63 kg/h and 0.48 kg/h, respectively, while 3.32 kg of hexane as a solvent was continuously supplied at 155 °C under a pressure of 89 bar. The molar ratio of 1-octene to ethylene was 0.19. The catalyst in hexane and the activator in toluene were continuously fed into the reactor at 25 μmol/hr and 48 to 72 μmol/hr, respectively. After 7-minute retention time at the reactor, 740.1 g of ethylene/1-octene copolymer was obtained. According to the experimental results, the ethylene/1-octene copolymer had a melt index (MI2) of 4.8 g/10min, a density of 0.870 g/cc, and a comonomer content (NMR) of 64.4 wt.%.

At a defined reactor temperature and a defined composition, the molecular weight of the polymer may be controlled by regulating the ethylene conversion rate in the reactor through the catalyst flow rate, and the used amount of hydrogen. Generally, with an increase in the ethylene conversion rate, the polymer has a lower molecular weight (Mw) and a higher melt index (MI). The density of the polymer may be adjusted by controlling the ethylene/octene molar ratio.

<u>Comparative Examples 1 to 7</u>

The ethylene and 1-octene copolymer commercially available was purchased from Dow Chemical Company.

The ethylene-octene copolymers of Examples I to 9 and Comparative Examples 1 to 7 were measured in regard to main properties as follows.

<Measurement of Monomer Distribution>

The monomer distribution in the ethylene-octene copolymer was analyzed from $^{13}C$-NMR spectrum with a 600MHz Bruker DRX600 instrument and calculated according to the Randall method [*Journal* of Polymer Science: Polymer *Physics* edition, 1973, 11, 275-287]. The polymer was dissolved in a tetrachloroethane-d2 solvent and the measurement was carried out at 120 °C.

<Measurement of Melt Index (MI)>

The melt index (MI) of the polymer was measured according to ASTM D-1238 (Condition E, 190 °C, 2,16 Kg load).

<Measurement of Melting Point>

The melting point Tm of the polymer was determined with a differential scanning calorimeter (DSC) 2920 manufactured by TA Instruments. To measure the melting point of the polymer, the DSC was operated to have the heat flow reach equilibrium at 0 °C, heated to 180 °C at a rate of 20 °C/min, cooled down to -60 °C at 20 °C/min, and then heated to 180 °C at 10 °C/min. The melting point was determined from an endothermic peak during the second rise of the temperature in the DSC curve.

<Measurement of Density>

The sample treated with an antioxidant (1,000 ppm) was processed into a 3mm-thick sheet with a radium of 2 cm with a press mold at 180 °C. The sheet was cooled down at 10 °C/min and weighed with a Mettler scale.

<Measurement of Degree of Crystallinity>

To determine the degree of crystallinity of the polymer, spectrum was acquired using a Dispersive Raman spectrometer commercially available from Thermo Electron Company. The spectrometer used 780nm laser with power of 10 mW and a 100$\mu$m pinhole. The Raman spectrum of each sample showed a band (1,418 $cm^{-1}$) corresponding to the crystallization region of polyolefin and a band (1,310 $cm^{-1}$) corresponding the anhydrous region, and the degree of crystallinity was determined base on the method disclosed in a document [Colloid & Polymer Sci., 1982, 260, 182-192].

<Measurement of Molecular Weight>

The molecular weight of the polymer was measured with a PL-GPC 220 equipped with three linear mixed bed columns commercially available from Polymer Laboratory. The measurement was performed using 1,2,4-trichlorobenzene as a solvent with a flux of 1.0 mL/min at 160 °C.

Table 3 shows the measurement results of the copolymers according to Examples 1 to 9 and Comparative Examples 1 to 7 in regard to 1-octene content, melt index, density, melting point, degree of crystallinity, molecular weight, and molecular weight distribution.

[Table 3]

| | Ethylene (mol%) | Octene (mol%) | Density ($g/cm^3$) | MI2 (g/10min) | Melting Point (°C) | Degree of Crystallinity (%) | Mw | Mw/Mn |
|---|---|---|---|---|---|---|---|---|
| Example 1 | 87.3 | 12.7 | 0.868 | 5.76 | 50 | 16 | 73,200 | 2.77 |
| Example 2 | 87.9 | 12.1 | 0.870 | 4.80 | 54.6 | 18 | 75,100 | 2.60 |
| Example 3 | 89.4 | 10.6 | 0.874 | 0.95 | 60.7 | - | 101,100 | 3.22 |
| Example 4 | 90.6 | 9.4 | 0.880 | 0.95 | 69.2 | - | 95,500 | 2.57 |
| Example 5 | 91.8 | 8.2 | 0.885 | 1.04 | 75.3 | 24 | 94,300 | 2.59 |
| Example 6 | 92.9 | 7.1 | 0.891 | 0.79 | 83.7 | - | 93,400 | 2.62 |
| Example 7 | 93.3 | 6.7 | 0.893 | 1.06 | 86.8 | - | 88,100 | 2.65 |
| Example 8 | 94.1 | 5.9 | 0.896 | 0.89 | 91.3 | - | 89,000 | 2.68 |
| Example 9 | 95.1 | 4.9 | 0.899 | 0.85 | 96.2 | 26 | 88,800 | 2.60 |
| Compartive Example 1 | 85.2 | 14.8 | 0.863 | 0.5 | 50.9 | - | 126,200 | 2.46 |
| Compartive Example 2 | 87.1 | 12.9 | 0.869 | 0.5 | 58.6 | - | 122,200 | 2.46 |

(continued)

| | Ethylene (mol%) | Octene (mol%) | Density (g/cm3) | MI2 (g/10min) | Melting Point (°C) | Degree of Crystallinity (%) | Mw | Mw/Mn |
|---|---|---|---|---|---|---|---|---|
| Compartive Example 3 | 87.4 | 12.6 | 0.871 | 5.0 | 62.8 | 20 | 74,200 | 2.37 |
| Compartive Example 4 | 88.8 | 11.2 | 0.875 | 3.0 | 68.7 | - | 79,600 | 2.38 |
| Compartive Example 5 | 90.9 | 9.1 | 0.885 | 1.0 | 83.7 | 26 | 92,200 | 2.45 |
| Compartive Example 6 | 93.1 | 6.9 | 0.896 | 1.6 | 94.9 | - | 78,800 | 3.23 |
| Compartive Example 7 | 94.8 | 5.2 | 0.9 | 1.0 | 100.0 | 32 | 83,900 | 2.48 |

The ethylene and octene contents were measured from $^{13}C$ NMR, the melting point from the second rise of temperature in the DSC curve, the degree of crystallinity from Raman spectrum interpretation.

With the similar octene contents, the copolymers of Example 1 (C8, 12.7 mol%) and Comparative Example 3 (C8, 12.6 mol%) were 0.868 g/cm$^3$ and 0.871 g/cm$^3$ in density, 50.0 °C and 62.8 °C in melting point, and 16 % and 20 % in degree of crystallinity, respectively. Namely, in spite of the similar octene contents, the copolymer of Example 1 of the present invention had a lower density, a lower melting point and a lower degree of crystallinity as compared to the copolymer of Comparative Example 3.

These results are presented in FIGS. 2 and 3. Flory and Allegra described that the most significant factors that determine the melting point of the polymer are the comonomer content and the comonomer distribution in the copolymer. The Example 1 and the Comparative Example 3 had a different melting point and a different density from each other with the similar comonomer contents (see FIGS. 2 and 3). To examine the difference in properties according to the comonomer distribution, $r_e * r_c$ was calculated using the TRIAD SEQUENCE ANALYSIS and the KAKUGO METHOD based on the $^{13}C$ NMR spectra. The results are presented in Table 4.

[Table 4]

| | Octene (mol%) | Density (g/cm3) | [OOO] | [OOE] | [EOE] | [OEO] | [OEE] | [EEE] | $r_e*r_c$ |
|---|---|---|---|---|---|---|---|---|---|
| Example 1 | 12.7 | 0.868 | 0.0 | 1.8 | 10.8 | 1.2 | 17.1 | 69.0 | 0.51 |
| Example 2 | 12.1 | 0.870 | 0.0 | 1.7 | 10.4 | 1.0 | 17.1 | 69.6 | 0.52 |
| Example 3 | 10.6 | 0.874 | 0.0 | 1.4 | 9.2 | 0.9 | 14.6 | 73.9 | 0.58 |
| Example 4 | 9.4 | 0.880 | 0.0 | 1.0 | 8.4 | 0.8 | 14.1 | 75.7 | 0.52 |
| Example 5 | 8.2 | 0.885 | 0.0 | 0.8 | 7.4 | 0.7 | 13.1 | 78.0 | 0.56 |
| Example 6 | 7.1 | 0.891 | 0.0 | 0.7 | 6.4 | 0.7 | 11.0 | 81.2 | 0.67 |
| Example 7 | 6.7 | 0.893 | 0.0 | 0.6 | 6.1 | 0.5 | 10.3 | 82.5 | 0.64 |
| Example 8 | 5.9 | 0.896 | 0.0 | 0.4 | 5.5 | 0.4 | 9.8 | 83.9 | 0.55 |
| Example 9 | 4.9 | 0.899 | 0.0 | 0.3 | 4.6 | 0.3 | 8.7 | 86.1 | 0.60 |
| Compartive Example 1 | 14.8 | 0.863 | 0.2 | 4.2 | 10.4 | 1.8 | 19.1 | 64.3 | 1.09 |
| Compartive Example 2 | 12.9 | 0.869 | 0.2 | 3.2 | 9.5 | 1.5 | 16.1 | 69.5 | 1.13 |
| Compartive Example 3 | 12.6 | 0.871 | 0.2 | 3.1 | 9.3 | 1.3 | 15.2 | 70.9 | 1.17 |
| Compartive Example 4 | 11.2 | 0.875 | 0.0 | 2.7 | 8.5 | 1.1 | 15 | 72.7 | 1.12 |
| Compartive Example 5 | 9.1 | 0.885 | 0.0 | 2.0 | 7.1 | 0.5 | 11.4 | 70.9 | 1.29 |
| Compartive Example 6 | 6.9 | 0.896 | 0.0 | 1.1 | 5.8 | 0.4 | 8.8 | 83.9 | 1.20 |
| Compartive Example 7 | 5.2 | 0.9 | 0.0 | 0.7 | 4.5 | 0.3 | 7.7 | 86.8 | 1.35 |

From the value of $r_e$* $r_c$ calculated by the Kakugo method, the ethylene-octene copolymers of Examples 1 to 9 had a comonomer distribution from 0.51 to 0.67, and the ethylene-octene copolymers of Comparative Examples 1 to 7 had a comonomer distribution from 1.09 to 1.35. In other words, the polymers of Examples 1 to 9 had a uniform comonomer distribution, while those of Comparative Examples 1 to 7 had a random or slightly blocky distribution.

In particular, it was demonstrated that the unique catalyst structure of the present invention contributed to a uniform comonomer distribution in the copolymer, which was accompanied with a lower density and a lower melting point under the same conditions in a comonomer content. Generally, the lower melting point goes with a decrease in the plastification temperature, so the polymer when mixed with another resin is susceptible to dispersion under low temperature and low shear stress conditions, causing an increase in the ability of mixing. The increased ability of mixing contributes to more enhanced and stable properties of the resin. Moreover, such a resin is endowed with a good thermal adhesiveness at a low temperature and consequently excellent characteristics as a low-temperature heat sealing improver for LDPE, MDPE, HDPE, PP, etc.

Experiment Example 1

The ethylene-octene copolymers according to Example 9 and Comparative Example 7 were used to fabricate films as follows, which films were then evaluated in regard to heat sealing property.

<Fabrication of Film>

Films using the ethylene-octene copolymers of Example 9 and Comparative Example 7 were fabricated by the blow molding method. The fabrication process employed a three-layer extruder with screw diameters of 30 , 40 and 30 mm. The outer and middle layers of the film were made from low-density polyethylene (LDPE) and linear low-density polyethylene (LLDPE), and the inner layer as a heat sealing layer was made from the products with a density of 0.900 $g/cm^3$ commercially available from LG and Dow. The film had a blow up ratio of 2.3 and an entire thickness of 100 μm, with the inner layer 20 μm thick.

<Measurement of Heat Sealing Strength>

The film as fabricated above was measured in regard to heat sealing strength with a J&B Hot Track Tester purchased from Swiss Management Company. The heat sealing conditions were given as follows.

- Seal time: 1 second
- Cool time: 30 seconds
- Seal Pressure: 0.1 $N/mm^2$
- Seal Area: 25mm X 5mm
- Seal Temperature: 80 to 150 °C (as sealing at every 5 °C)
- Peel Rate: 100 mm/s

The film was sealed at a defined temperature and, after 30 seconds, pulled up and down to measure the sealing strength. Five samples per each temperature were prepared and the measurement values were averaged.

FIG. 4 shows the peel strength depending on the heat sealing temperature of the films fabricated from the ethylene-octene copolymers of Example 9 and Comparative Example 7.

As can be seen from FIG. 4, compared to the films made from the ethylene-octene copolymer of Comparative Example 7, the films using the ethylene-octene copolymer of Example 9 started to be sealed at a lower temperature and showed a greater peel strength. Particularly, the films using the copolymer of Example 9 began to be sealed at 85 °C and exhibited a great peel strength relative to the films using the copolymer of Comparative Example 7. This tendency was also shown at heat sealing temperatures of 90 °C and 95 °C

Therefore, the ethylene-octene copolymer of the present invention sufficiently exhibits a sealing effect at a low temperature in fabrication of films and thus can be quite preferably used as a sealing or coating material.

Hereinabove, the preferred embodiments of the present invention have been explained in detail, but the scope of the present invention should not be limited thereto, and various modifications and improvements made by a person of ordinary skill in the art with using a basic concept defined by the following claims should also be construed to belong to the scope of the present invention.

## Claims

1. Use of an ethylene-octene copolymer being prepared in the presence of a catalyst composition and having a density of 0.857 to 0.91 g/cm3 in the fabrication of films, the ethylene-octene copolymer having:

   1) a molecular weight distribution Mw/Mn of at most 3.5;
   2) a reactivity ratio $r_e$ of ethylene to catalyst multiplied by a reactivity ratio $r_o$ of octene to catalyst being in the range of 0.5 to 0.8; and
   3) the density of the ethylene-octene copolymer and an octene content a (alpha, mol%) in the ethylene-octene copolymer being in the range of the following Inequation 1:

[Inequation 1]

$$0.9190 - 0.0043\alpha < \text{density} < 0.9205 - 0.0040\alpha.$$

2. Use of an ethylene-octene copolymer according to Claim 1, wherein the ethylene-octene copolymer has a melting point Tm (degrees Celsius, °C) and the octene content $\alpha$ (alpha, mol%) satisfliying the following Inequation 2:

[Inequation 2]

$$120 - 6.2\alpha < Tm < 129 - 5.7\alpha$$

3. Use of an ethylene-octene copolymer according to Claim 1, wherein the catalyst composition comprises a metallocene catalyst.

4. Use of an ethylene-octene copolymer according to Claim 1, wherein the catalyst composition comprises a transition metal compound represented by the following Formula 1:

[Formula 1]

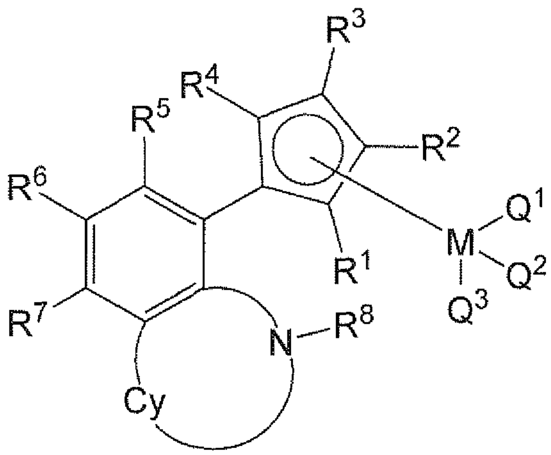

wherein $R^1$, $R^2$, $R^3$, and $R^4$ are the same as or different from one another and are independently hydrogen, an alkyl, aryl or silyl radical having 1 to 20 carbon atoms; an alkenyl, alkylaryl or arylalkyl radical having 1 to 20 carbon atoms; or a hydrocarbyl-substituted Group 14 metalloid radical; or $R^1$, $R^2$, $R^3$, and $R^4$ are linked to one another to form a ring by an alkylidine radical including an alkyl or aryl radical having I to 20 carbon atoms;
$R^5$, $R^6$, and $R^7$ are the same as or different from one another and are independently hydrogen, a halogen radical; or an alkyl, aryl, alkoxy, aryloxy or amido radical having 1 to 20 carbon atoms; or at least two of $R^5$, $R^6$, and $R^7$ are linked to each other to form an aliphatic or aromatic ring;
$R^8$ is an alkyl, aryl, alkylaryl or arylalkyl radical having 1 to 20 carbon atoms;
Cy is a substituted or unsubstituted aliphatic or aromatic ring;
M is a Group-4 transition metal; and

$Q^1$, $Q^2$ and $Q^3$ are independently a halogen radical, an alkyl or aryl amido radical having 1 to 20 carbon atoms, an alkyl, alkenyl, aryl, alkylaryl or arylalkyl radical having 1 to 20 carbon atoms, or an alkylidene radical having 1 to 20 carbon atoms.

**5.** Use of an ethylene-octene copolymer according to Claim 1, wherein the catalyst composition further comprises at least one co-catalyst selected from the compounds represented by the following Formula 2, 3 or 4:

[Formula 2] $-[Al(R^9)-O]_a-$

wherein $R^9$ is a halogen radical, a hydrocarbyl radical having 1 to 20 carbon atoms, or a halogen-substituted hydrocarbyl radical having 1 to 20 carbon atoms; and a is an integer of at least 2,

[Formula 3] $Al(R^{10})_3$

wherein $R^{10}$ is a halogen radical, a hydrocarbyl radical having 1 to 20 carbon atoms, or a halogen-substituted hydrocarbyl radical having 1 to 20 carbon atoms,

[Formula 4] $[L-H]^+[ZA_4]^-$ or $[L]^+[ZA_4]^-$

wherein L is a neutral or cationic Lewis acid; H is hydrogen; Z is a Group 13 element; and A is an aryl or alkyl radical having 1 to 20 carbon atoms with at least one hydrogen atom thereof being substituted with a hydrocarbyl, alkoxy or phenoxy radical having 6 to 20 carbon atoms.

**6.** Use of an ethylene-octene copolymer according to Claim 1, wherein the ethylene-octene copolymer has an octene content of 2 to 20 mol%.

**Patentansprüche**

**1.** Verwendung eines Ethylen-Octen-Copolymers, hergestellt in der Gegenwart einer Katalysatorzusammensetzung und mit einer Dichte von 0,857 bis 0,91 g/cm$^3$ in der Herstellung von Filmen, wobei das Ethylen-Octen-Copolymer aufweist:

1) eine Molekulargewichtsverteilung Mw/Mn von höchstens 3,5;
2) ein Reaktivitätsverhältnis $r_e$ von Ethylen zum Katalysator multipliziert mit einem Reaktivitätsverhältnis $r_o$ von Octen zum Katalysator in dem Bereich von 0,5 bis 0,8; und
3) die Dichte des Ethylen-Octen-Copolymers und ein Octen-Gehalt $\alpha$ (Alpha, Mol%) in dem Ethylen-Octen-Copolymer im Bereich der folgenden Ungleichung 1:

[Ungleichung 1]

$$0{,}9190 - 0{,}0043\alpha < \text{Dichte} < 0{,}9205 - 0{,}0040\alpha.$$

**2.** Verwendung eines Ethylen-Octen-Copolymers nach Anspruch 1, wobei das Ethylen-Octen-Copolymer einen Schmelzpunkt Tm (Grad Celsius, °C) aufweist und der Octen-Gehalt $\alpha$ (Alpha, Mol%) die folgende Ungleichung 2 erfüllt:

[Ungleichung 2]

$$120 - 6{,}2\alpha < Tm < 129 - 5{,}7\alpha$$

**3.** Verwendung eines Ethylen-Octen-Copolymers nach Anspruch 1, wobei die Katalysatorzusammensetzung einen Metallocenkatalysator umfasst.

**4.** Verwendung eines Ethylen-Octen-Copolymers nach Anspruch 1, wobei die Katalysatorzusammensetzung eine Übergangsmetallverbindung umfasst, die durch die folgende Formel 1 dargestellt wird:

[Formel 1]

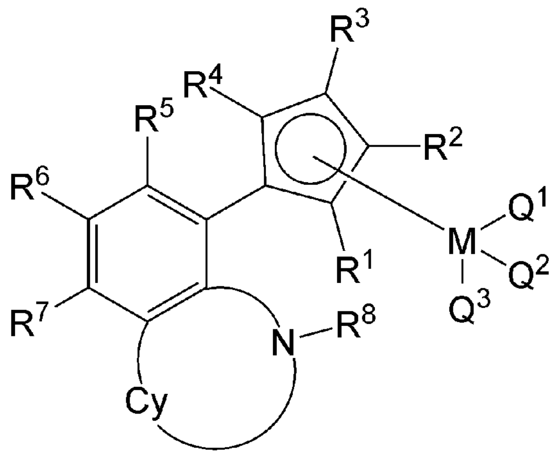

,

wobei $R^1$, $R^2$, $R^3$ und $R^4$ gleich oder verschieden voneinander sind und unabhängig Wasserstoff, ein Alkyl-, Aryl- oder Silylrest mit 1 bis 20 Kohlenstoffatomen; ein Alkenyl-, Alkylaryl- oder Arylalkylrest mit 1 bis 20 Kohlenstoffatomen; oder ein mit Kohlenwasserstoff substituierter Metalloidrest der Gruppe 14 sind; oder $R^1$, $R^2$, $R^3$ und $R^4$ miteinander verknüpft sind, um einen Ring durch einen Alkylidinrest einschließend einen Alkyl- oder Arylrest mit 1 bis 20 Kohlenstoffatomen zu bilden;
$R^5$, $R^6$ und $R^7$ gleich oder unterschiedlich voneinander sind und unabhängig Wasserstoff, ein Halogenrest; oder ein Alkyl-, Aryl-, Alkoxy-, Aryloxy- oder Amidorest mit 1 bis 20 Kohlenstoffatomen sind; oder wenigstens zwei von $R^5$, $R^6$ und $R^7$ miteinander verknüpft sind, um einen aliphatischen oder aromatischen Ring zu bilden;
$R^8$ ein Alkyl-, Aryl-, Alkylaryl- oder Arylalkylrest mit 1 bis 20 Kohlenstoffatomen ist;
Cy ein substituierter oder unsubstituierter aliphatischer oder aromatischer Ring ist;
M ein Übergangsmetall der Gruppe 4 ist; und
$Q^1$, $Q^2$ und $Q^3$ unabhängig ein Halogenrest, ein Alkyl- oder Arylamidorest mit 1 bis 20 Kohlenstoffatomen, ein Alkyl-, Alkenyl-, Aryl-, Alkylaryl- oder Arylalkylrest mit 1 bis 20 Kohlenstoffatomen sind oder ein Alkylidenrest mit 1 bis 20 Kohlenstoffatomen.

**5.** Verwendung eines Ethylen-Octen-Copolymers nach Anspruch 1, wobei die Katalysatorzusammensetzung ferner wenigstens einen Cokatalysator umfasst, der ausgewählt wird aus den Verbindungen, die durch die folgenden Formeln 2, 3 oder 4 dargestellt werden:

[Formel 2] $-[Al(R^9)-O]_a-$ ,

wobei $R^9$ ein Halogenrest, ein Kohlenwasserstoffrest mit 1 bis 20 Kohlenstoffatomen oder ein Halogen-substituierter Kohlenwasserstoffrest mit 1 bis 20 Kohlenstoffatomen ist; und wobei a eine ganze Zahl von wenigstens 2 ist,

[Formel 3] $Al(R^{10})_3$,

wobei $R^{10}$ ein Halogenrest, ein Kohlenwasserstoffrest mit 1 bis 20 Kohlenstoffatomen oder ein Halogen-substituierter Kohlenwasserstoffrest mit 1 bis 20 Kohlenstoffatomen ist,

[Formel 4] $[L-H]^+[ZA_4]^-$ oder $[L]^+[ZA_4]^-$,

wobei L eine neutrale oder kationische Lewis-Säure ist; H Wasserstoff ist; Z ein Element der Gruppe 13 ist; und A ein Aryl- oder Alkylrest mit 1 bis 20 Kohlenstoffatomen ist, wobei wenigstens ein Wasserstoffatom desselben durch einen Kohlenwasserstoff-, Alkoxy- oder Phenoxyrest mit 6 bis 20 Kohlenstoffatomen substituiert ist.

**6.** Verwendung eines Ethylen-Octen-Copolymers nach Anspruch 1, wobei das Ethylen-Octen-Copolymer einen Octengehalt von 2 bis 20 Mol% aufweist.

## Revendications

**1.** Utilisation d'un copolymère d'éthylène-octène préparé en présence d'une composition de catalyseur et ayant une densité de 0,857 à 0,91 g/cm$^3$ dans la fabrication de films, le copolymère d'éthylène-octène ayant :

1) une distribution de poids moléculaires Mw/Mn d'au plus 3,5 ;
2) un rapport de réactivité $r_e$ de l'éthylène par rapport au catalyseur multiplié par un rapport de réactivité $r_o$ de l'octène par rapport au catalyseur se situant dans la plage de 0,5 à 0,8 ; et
3) la densité du copolymère d'éthylène-octène et une teneur en octène de $\alpha$ (alpha, % en moles) dans le copolymère d'éthylène-octène se situant dans la plage de l'inéquation 1 suivante :

[Inéquation 1]

$$0{,}9190 - 0{,}0043\alpha < \text{densité} < 0{,}9205 - 0{,}0040\alpha.$$

**2.** Utilisation d'un copolymère d'éthylène-octène selon la Revendication 1, dans lequel le copolymère d'éthylène-octène présente un point de fusion Tm (degrés en Celsius, °C) et la teneur en octène $\alpha$ (alpha, % en moles) satisfaisait à l'inéquation 2 suivante :

[Inéquation 2]

$$120\text{-}6{,}2\alpha < Tm < 129 - 5{,}7\alpha$$

**3.** Utilisation d'un copolymère d'éthylène-octène selon la Revendication 1, dans lequel la composition de catalyseur comprend un catalyseur métallocène.

**4.** Utilisation d'un copolymère d'éthylène-octène selon la Revendication 1, dans lequel la composition de catalyseur comprend un composé de métal de transition représenté par la Formule 1 suivante :

[Formule 1]

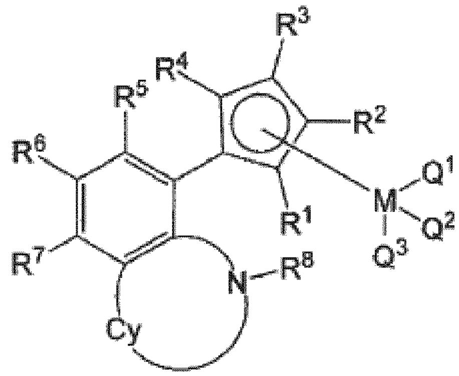

dans laquelle formule, $R^1$, $R^2$, $R^3$ et $R^4$ sont identiques ou différents les uns des autres et représentent indépendamment l'hydrogène, un radical alkyle, aryle ou silyle portant 1 à 20 atomes de carbone ; un radical alkényle, alkylaryle ou arylalkyle portant 1 à 20 atomes de carbone ; ou un radical métalloïde du Groupe 14 substitué par l'hydrocarbyle ; ou $R^1$, $R^2$, $R^3$ et $R^4$ sont liés l'un à l'autre pour former un cycle formé par un radical alkylidine comprenant un radical alkyle ou aryle portant 1 à 20 atomes de carbone ;
$R^5$, $R^6$ et $R^7$ sont identiques ou différents les uns des autres et représentent indépendamment l'hydrogène, un radical halogène ; ou un radical alkyle, aryle, alcoxy, aryloxy ou amido portant 1 à 20 atomes de carbone ; ou au moins deux de $R^5$, $R^6$ et $R^7$ sont liés les uns aux autres pour former un cycle aliphatique ou aromatique ;
$R^8$ représente un radical alkyle, aryle, alkylaryle ou arylalkyle portant 1 à 20 atomes de carbone ;
Cy représente un cycle aliphatique ou aromatique substitué ou non substitué ;
M représente un métal de transition du Groupe 4 ; et

$Q^1$, $Q^2$ et $Q^3$ représentent indépendamment un radical halogène, un radical alkyle ou aryle amido portant 1 à 20 atomes de carbone, un radical alkyle, alkényle, aryle, alkylaryle ou arylalkyle portant 1 à 20 atomes de carbone ou un radical alkylidène portant 1 à 20 atomes de carbone.

**5.** Utilisation d'un copolymère d'éthylène-octène selon la Revendication 1, dans lequel la composition de catalyseur comprend au moins un cocatalyseur sélectionné parmi les composés représentés par les Formules 2, 3 ou 4 suivantes :

[Formule 2] $-[Al(R^9)-O]_a-$

dans laquelle formule, $R^9$ représente un radical halogène, un radical hydrocarbyle portant 1 à 20 atomes de carbone ou un radical hydrocarbyle substitué par l'halogène portant 1 à 20 atomes de carbone ; et a représente un nombre entier valant au moins 2,

[Formule 3] $Al(R^{10})_3$

dans laquelle formule, $R^{10}$ représente un radical halogène, un radical hydrocarbyle portant 1 à 20 atomes de carbone ou un radical hydrocarbyle substitué par l'halogène portant 1 à 20 atomes de carbone,

[Formule 4] $[L-H]^+[ZA_4]^-$ ou $[L]^+[ZA_4]^-$

dans laquelle formule, L représente un acide de Lewis neutre ou cationique ; H représente un atome d'hydrogène ; Z représente un élément du Groupe 13 ; et A représente un radical aryle ou alkyle portant 1 à 20 atomes de carbone avec au moins un de ses atomes d'hydrogène substitué par un radical hydrocarbyle, alcoxy ou phénoxy portant 6 à 20 atomes de carbone.

**6.** Utilisation d'un copolymère selon la Revendication 1, dans lequel le copolymère d'éthylène-octène a une teneur en octène de 2 à 20 % en moles.

FIG. 1

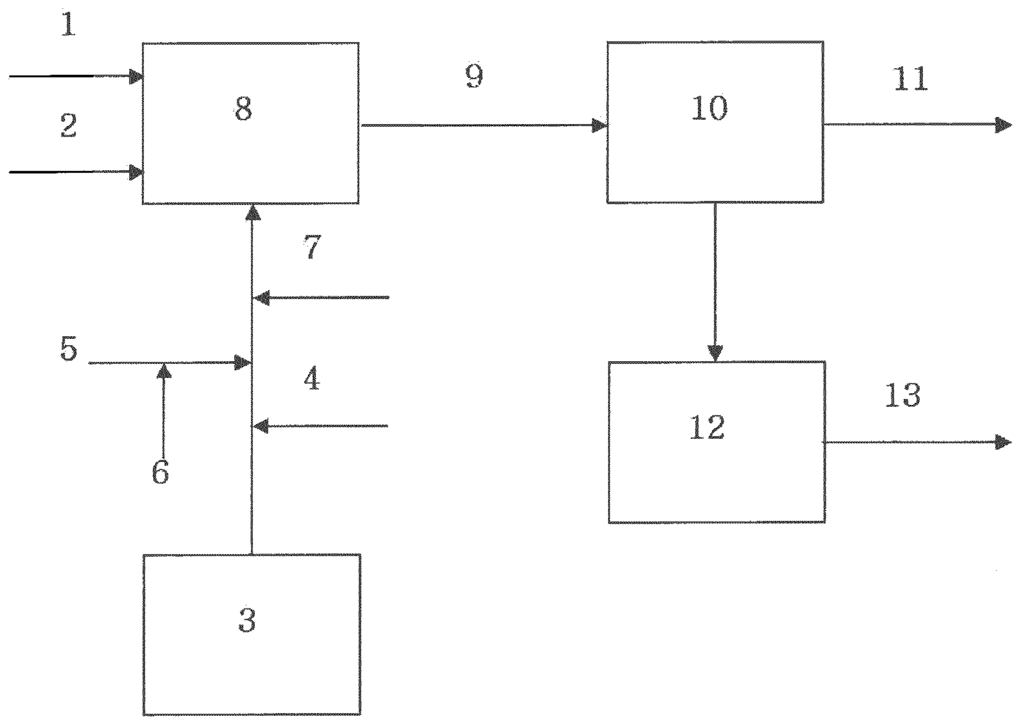

FIG. 2

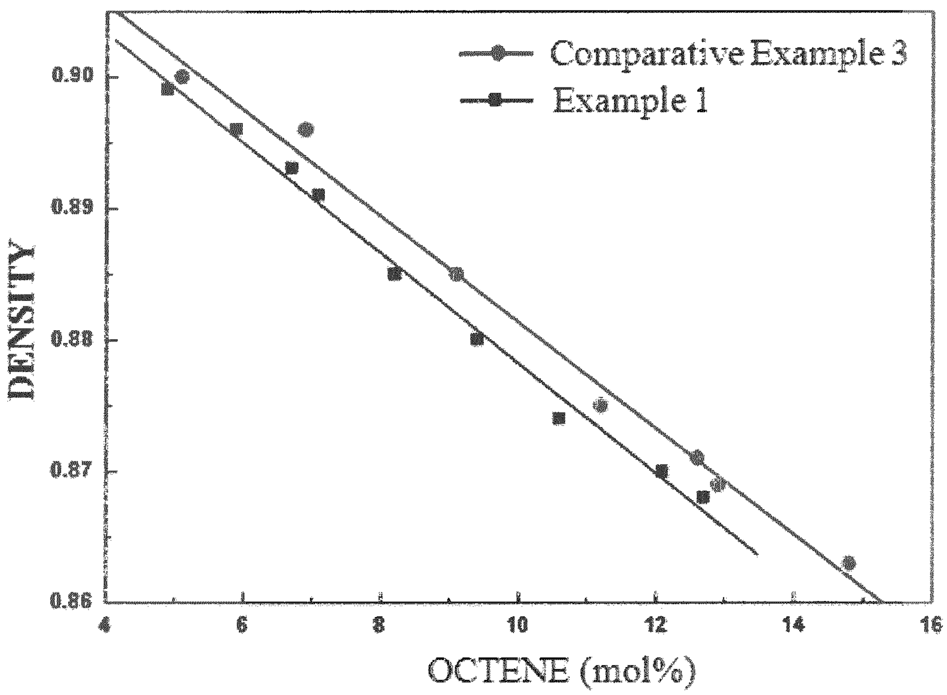
Comparative Example 3
Example 1
DENSITY
0.90
0.89
0.88
0.87
0.86
4
6
8
10
12
14
16
OCTENE (mol%)

FIG. 3

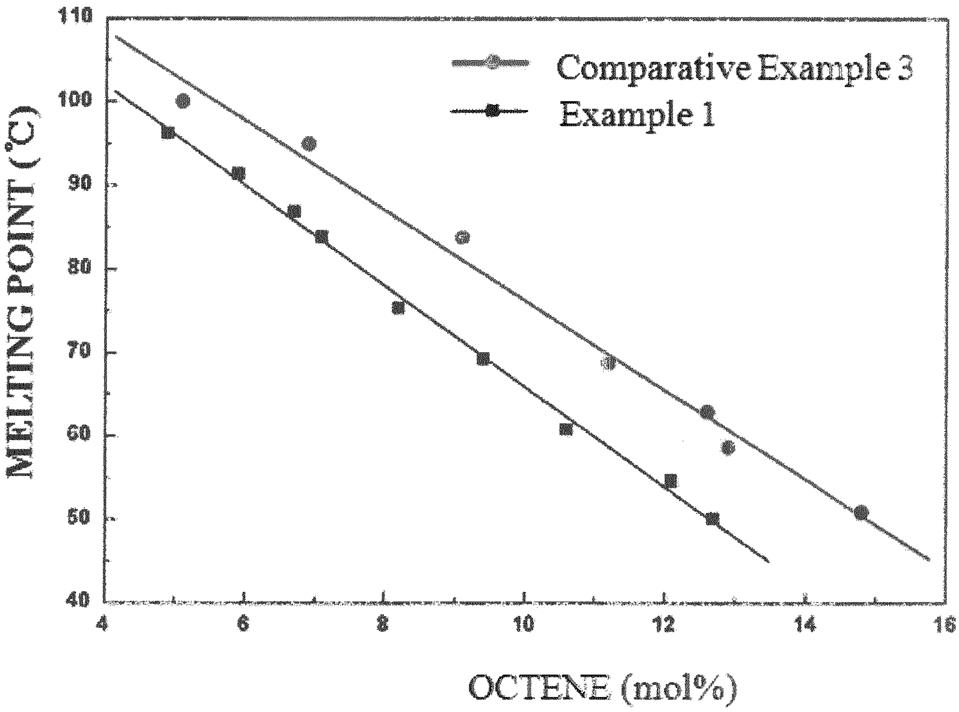
110
100
90
80
70
60
50
40
MELTING POINT (℃)
4
6
8
10
12
14
16
OCTENE (mol%)
Comparative Example 3
Example 1

FIG. 4

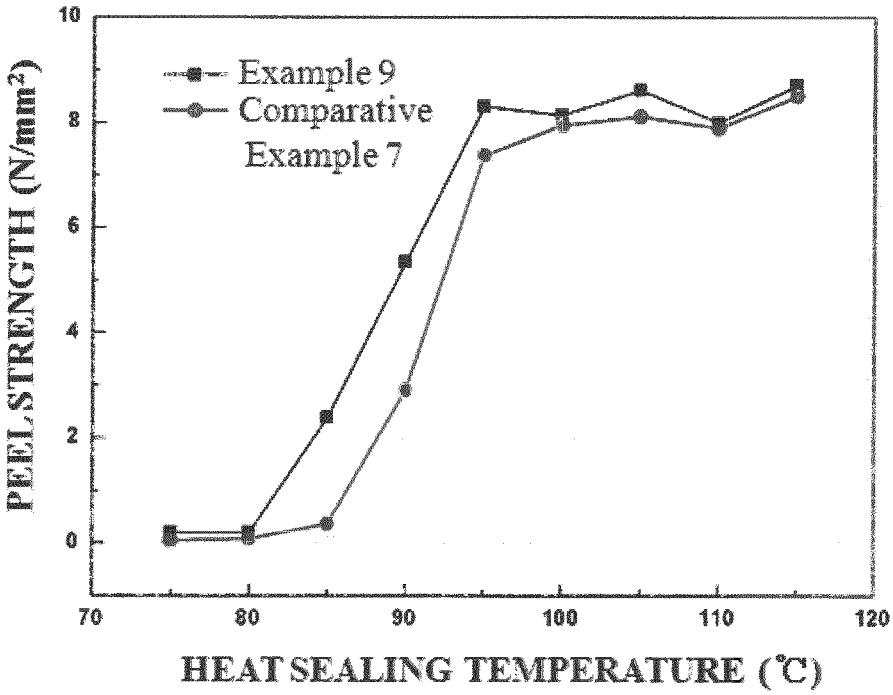
10
8
6
4
2
0
70
80
90
100
110
120
Example 9
Comparative Example 7
PEEL STRENGTH (N/mm²)
HEAT SEALING TEMPERATURE (℃)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **FLORY.** *Trans Faraday Soc.,* 1955, vol. 51, 848
- **ALLEGRA.** *J Polym Sci Part B: Polym Phys.,* 1992, vol. 30, 809
- **KAKUGO.** *Macromolecules,* 1982, vol. 15, 1150
- **MIRABELLA.** *J Polym Sci Part B: Polym Phys,* 2004, vol. 42, 3416-3427
- *Colloid & Polymer Sci.,* 1982, vol. 260, 182-192